# EUROPEAN PATENT APPLICATION

(11) **EP 1 521 024 A1**
(43) Date of publication of application: **06.04.2005**
(21) Application number: 04023445.2
(22) Date of filing: 01.10.2004
(51) Int. Cl.: F16L 3/10

(54) **Clamp for slender object such as a cable**

(30) Priority: 03.10.2003 JP 2003345747
(71) Applicant: Newfrey LLC, Newark, Delaware 19711 (US); G.S. Electech, Inc., Toyota-shi, Aichi-ken (JP)
(72) Inventor: Kawai, Yasuhiro, Toyohashi-shi Aichi-ken (JP); Hirai, Takayuki, Toyota-shi Aichi-ken (JP)
(74) Representative: Haar, Lucas H., Dipl.-Ing.

(57) **Abstract**

A plastic cable clamp (1) has a substantially U-shaped clamp portion formed with a pair of clamp arms, and a cover (13) for closing an opening in the clamp portion. The cover pivots on a hinge to close the opening in the clamp portion and is maintained in the closed position by means of an engagement portion (18) thereon. A protrusion (26) is formed at the end of a clamp arm with the hinge, and a recess (27) is formed in the cover to receive the protrusion. The recess includes a first hole (29) extending from one side of the cover toward the other side of the cover, and a second hole (30) adjacent to the first hole and extending from the other side of the cover toward the one side of the cover. One of the walls of the recess is formed by an end surface of the first hole on the other side, and an opposite wall (33) is formed by an end surface of the second hole at the one side. The cable clamp can be manufactured by using a simple shaping mold, allowing the cable clamp to be manufactured with two split dies and without requiring any additional die component such as a slide

## Description

### BACKGROUND OF THE INVENTION

The present invention relates to a clamp for a slender object and, more specifically, to a clamp in which a slender object, e.g., a cable such as a signal cable in an antilock brake system (ABS), is attached to a support such as a body panel. The invention is particularly concerned with a plastic clamp that can be molded in a simple shaping mold using two split dies and without requiring any additional die component such as a slide. For simplicity of description, the clamp of the invention will be referred to generically as a "cable clamp".

A cable clamp with a cover by means of which a slender object is fixed to a support such as a body panel is well known in the art. For example, the cable clamp disclosed in Japanese Design Patent No. 595,528 (Patent Document 1) comprises a fixed portion attached to the support, a U-shaped clamp portion consisting of a pair of clamp arms extending from the fixed portion, and a cover for closing the opening in the clamp portion. A slender object is inserted in the opening in the clamp portion, and the opening is closed by the cover to secure the slender object. The cover and the clamp portion are formed integrally via a hinge and, after the cover has been pivoted on the hinge into the closed position, an interlocking portion disposed on the cover and an interlocking portion disposed on the clamp portion firmly secure the cover in the closed position. In this cable clamp, if the slender object fixed by the clamp portion moves lengthwise relative to the clamp portion, the cover frictionally contacting the slender object also moves lengthwise relative to the clamp portion. If there is significant movement lengthwise, the interlocking portion on the cover tends to disengage from the interlocking portion on the clamp portion, and the slender object tends to come out of the cable clamp.

In the cable clamp disclosed in Kokai 10-259884 (Patent Document 2), a fixed portion attached to the support member, a semi-circular clamp portion for securing a slender object, and a semi-circular cover for closing the opening in the clamp portion are formed integrally. A slender object is inserted in the opening in the clamp portion, and the opening is closed with the cover to secure the slender object. The cover is connected to the clamp portion by a hinge, enabling the cover to pivot and close the opening in the clamp portion. An engagement portion is formed on one end of the cover to engage an engagement portion formed on one end of the clamp portion so as to secure the cover. An external protrusion is formed near the hinge on the clamp portion, and a recess is formed in the cover to receive the protrusion when the cover is closed, thereby securing the cover in the closed position. In this cable clamp, a tiered section is formed so that if the slender object fixed by the clamp portion moves lengthwise relative to the clamp portion, the cover frictionally contacting the slender object does not move lengthwise relative to the clamp portion.

A cable clamp has been developed that secures the cover in the closed position and keeps the cover from moving lengthwise with respect to the clamp portion, and that can be formed by using a simple shaping die. Such a cable clamp is described in International Application Publication No. WO 03/001069 (Patent Document 3). This clamp has a U-shaped clamp portion with a pair of clamp arms, and a cover for closing the opening in the clamp portion. One end of the cover is connected by a thin hinge to one of the clamp arms, enabling the cover to pivot and close the opening in the clamp portion. An engagement portion is formed on the other end of the cover to engage an engagement portion formed on one end of the other clamp arm so as to maintain the cover in the closed position. An external protrusion is formed on the end of the clamp arm with the thin hinge, and a recess is formed in the cover at a position corresponding to the protrusion to receive the protrusion when the cover is closed. An interlocking shoulder for interlocking with the protrusion so as to lock the cover in the closed position is formed in the recess, with walls on both sides of the interlocking shoulder retaining the protrusion in the recess lengthwise with respect to the slender object.

In the cable clamp described in Patent Document 3, walls of the recess restrict relative lengthwise movement of the protrusion and the recess. As a result, the cover can be restricted from moving lengthwise with respect to the clamp portion. Also, because the interlocking portion and walls in the recess are molded, a simple shaping mold can be used to mold them, and the cost of shaping molds can be held down.

However, although the cable clamp described in Patent Document 3 can be formed using a simple shaping mold, during the formation of the recess in the cover for receiving the protrusion on the clamp arm, a slide used to form the recess is arranged inside two split dies used to form the overall cable clamp, and the recess is formed by removing the slide after the cable clamp has been molded. Because a slide is required, the cable clamp cannot be molded using two split dies alone.

### BRIEF DESCRIPTION OF THE INVENTION

An object of the present invention is to provide a cable clamp that can be formed by using a simple shaping mold and that allows the cable clamp to be manufactured with two split dies without requiring any additional die component such as a slide.

In accordance with a preferred, but non-limiting embodiment, the present invention comprises an integrally molded plastic cable clamp for a slender object, wherein the clamp has a substantially U-shaped clamp portion with a pair of clamp arms, and a cover for closing the opening in the clamp portion. One end of the cover is connected by a thin hinge to one of the clamp arms, enabling the cover to pivot and close the opening in the clamp portion. An engagement portion is formed on the other end of the cover to engage an engagement portion formed on one end of the other clamp arm so as to maintain the cover in the closed position. An external protrusion is formed on the end of the clamp arm with the thin hinge, and a recess is formed in the cover at a position corresponding to the protrusion to receive the protrusion when the cover is closed. An interlocking shoulder for interlocking with the protrusion, so as to lock the cover in the closed position is formed in the recess, and walls on both sides of the interlocking shoulder restrain the protrusion in the recess lengthwise with respect to the slender object. The recess includes a first hole extending from one side of the cover toward the other side of the cover lengthwise with respect to the slender object, and a second hole connected to the first hole and extending from the other side of the cover toward the one side of the cover lengthwise with respect to the slender object. One of the walls of the recess is formed by an end surface of the first hole on the other side, and the other wall is formed by an end surface of the second hole at the one side.

In this way, the lock on the cover remains secure and a slippage force of the slender object lengthwise with respect to the cable clamp can be resisted. Because the recess is formed by a first hole from one surface of the cover and a second hole from the other surface, the entire cable clamp including the recess can be molded without a slide, using two dies split along the center plane between the sides of the cover and the clamp portion, thereby reducing the cost of molded products.

Preferably, in the cable clamp described above, a fixed portion to be attached to a support is formed integrally with the clamp portion. The fixed portion includes a shaft extending downwards from the clamp portion, a pair of elastic legs extending from an end of the shaft towards the clamp portion and bending outwardly in opposite directions with respect to one another, and a flange adjacent to the clamp portion at the base of the shaft. A plurality of shoulders are formed on outer ends of the engaging legs to interlock with an edge of an attachment hole in the support, and a pair of elastic portions are disposed on the flange for elastically contacting the support. This allows supports with different thicknesses to be accommodated using a single type of cable clamp.

### BRIEF DESCRIPTION OF THE DRAWINGS

The invention will be further described in conjunction with the accompanying drawings, which illustrate a preferred (best mode) embodiment of the invention, and wherein:
FIG 1 is a plan view of a cable clamp of the present invention with the cover of the cable clamp in the open position;
FIG 2 is a front view of the cable clamp in FIG 1;.
FIG 3 is a right side view of the cable clamp in FIG 1;
FIG 4 is a rear view of the cable clamp in FIG 1;
FIG 5 is a front view showing a cable to be secured by the cable clamp in FIG 1;
FIG 6 is a front view showing the cable clamp in FIG 5 securing a cable;
FIG 7 is a fragmentary view in the direction of arrow A in FIG 6;
FIG 8 is a view showing the cable clamp in FIG 6 securing a cable and attached to a thin body panel; and
FIG 9 is a view showing the cable clamp in FIG 6 securing a cable and attached to a thick body panel.

### DETAILED DESCRIPTION OF THE INVENTION

A cable clamp of the present invention, for attaching a slender object to a support, will now be explained with reference to the drawings. The term "slender object" is used herein generically to include a variety of slender objects, such as, for example, and without limitation, a cable, an electric wire, a pipe, or a conduit, and all such slender objects are considered to be within the scope of the invention.

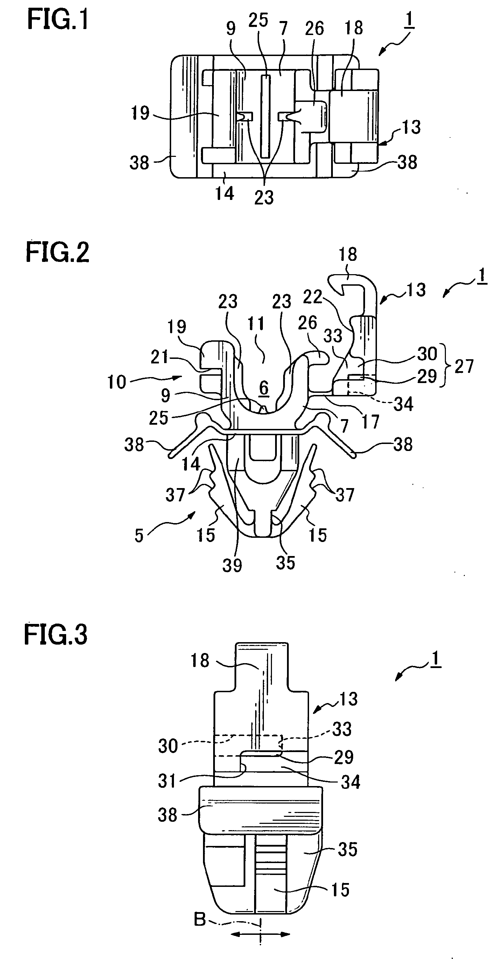

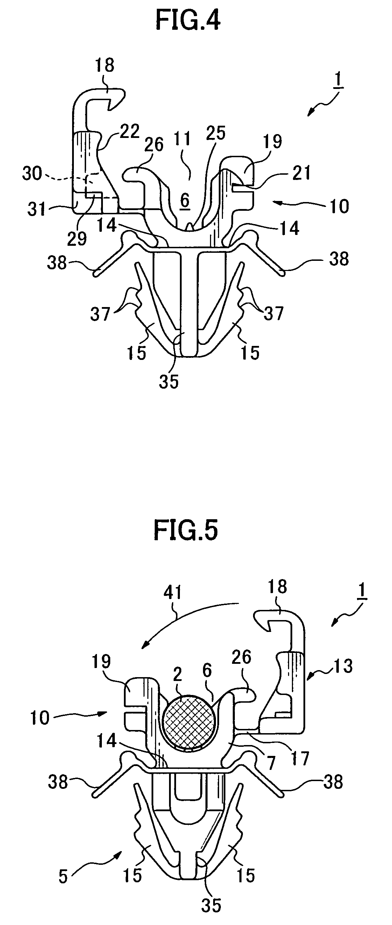

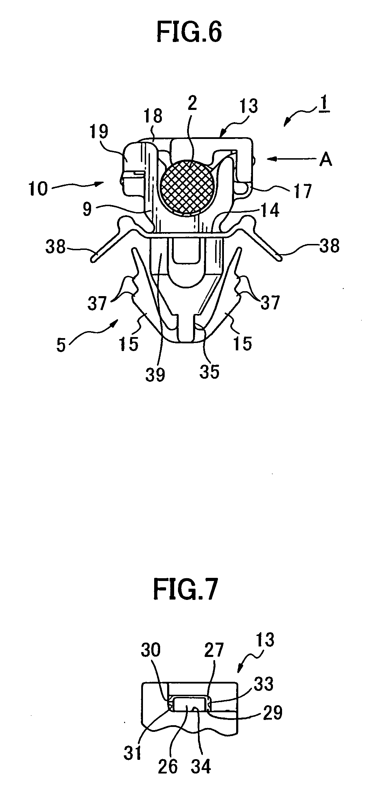

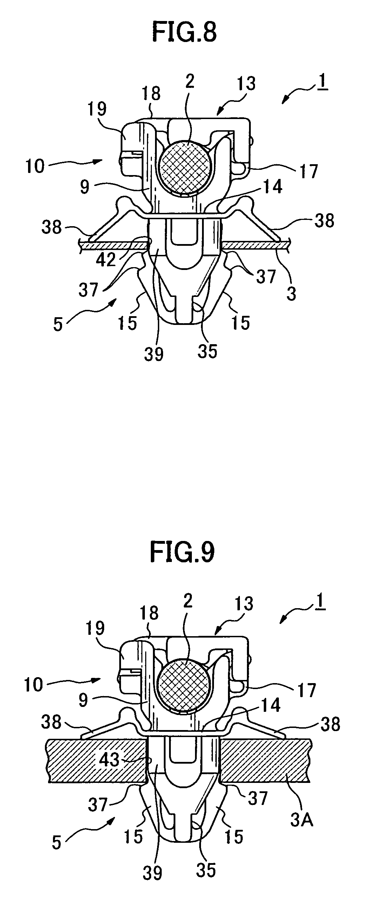

The cable clamp 1 is molded as a single unit from a plastic material. As shown in FIG 1 through FIG 4, the cable clamp 1 includes a fixed portion 5 to be attached to a support such as a body panel 3 (FIG 8 or FIG 9), a U-shaped clamp portion 10 including two clamp arms 7, 9 rising from the fixed portion 5 for holding a slender object 2 (FIG 5), and a cover 13 for closing the opening 11 in the clamp portion 10. When a slender object is accommodated by the holding portion 6 of the clamp portion 10 and the opening 11 is closed by the cover 13, the slender object 2 is secured by the clamp portion 10. As shown in FIG 1 and FIG 3, the cover 13 and clamp portion 10 are formed with a specific length and width lengthwise and widthwise with respect to a slender object to be held. The fixed portion 5 is mounted on a support by inserting it into an attachment hole formed in the support, such as a body panel 3. The fixed portion 5 includes a flange 14 and a pair of legs 15. Such cable clamps 1 can be mounted at various positions along body panel 3 to attach a slender object 2 at various places.

The cover 13 is connected by a thin hinge 17 to an outside surface of clamp arm 7. The cover 13 can be pivoted on the hinge 17 to close the opening 11 in the clamp portion 10. A cover engaging portion 18 is formed on the cover 13 at the end opposite the hinge 17. Also, a clamp portion engaging portion 19 is formed on the other clamp arm 9 to receive the cover engaging portion 18 and engage it. In this example, a shoulder 21 is formed in the clamp portion engaging portion 19 to engage the hook-shaped cover engaging portion 18. The cover engaging portion 18 engages the shoulder 21 on the clamp portion engaging portion 19 and secures the cover 13 in the closed position. The cover engaging portion 18 can have a release lever (not shown) so the engagement can be released using a finger or a tool such as a screw driver. A pressure-applying portion 22 formed inside the cover 13 is shaped so as to maintain pressure on the slender object 2 accommodated by the holding portion 6 of the clamp portion 10.

In the holding portion 6 are formed a pair of peripheral ribs 23 for holding in place side surfaces of a held slender object peripherally, and a central rib 25 extending lengthwise with respect to the slender object at the center of the bottom surface of the holding portion 6. The ribs 23 help prevent movement lengthwise with respect to the slender object, and the central rib 25 helps secure the slender object in the holding portion 6. These ribs 23 and 25 hold the slender object securely and reliably and increase the strength of the clamp portion 10.

As shown in FIG 2, an external protrusion 26 projecting from the U-shaped holding portion 6 is formed on the end of the clamp arm 7. As shown in FIG 1, the width of the protrusion 26 is less than the width of the cover 13. A recess 27 is formed in the cover 13 at a position corresponding to the protrusion 26 to receive the protrusion 26 when the cover 13 is closed. The protrusion 26 and recess 27 are shown in FIG 7, which is a view in the direction of arrow A in FIG 6 with the cover 13 closed.

As shown in FIG 3, the recess includes a first hole 29 extending from one side of the cover 13 (the right side) toward the other side of the cover (the left side) lengthwise with respect to the slender object (widthwise to the cover 13), and a second hole 30 connected to the first hole 29, and extending from the other side of the cover 13 (the left side in FIG 3) toward the one side of the cover (the right side in FIG 3) lengthwise with respect to the slender object. The width of recess 27 formed by the first hole 29 and the second hole 30, as shown in FIG 7, is less than the width of the cover 13 (lengthwise with respect to the slender object). The recess 27 has a first wall 31 formed by an end surface on the other side of the first hole 29 (the left side in FIG 3) and a second wall 33 formed by an end surface on the one side of the second hole 30 (the right side in FIG 3) to accommodate the protrusion 26 in the space between them. By virtue of this arrangement, a cable clamp 1 with a recess 27 can be molded without a slide, using two dies split along the center plane between both sides of the cover and the clamp portion, which are the left and right sides in FIG 3. This helps lower the cost of molded products. The shape of the shaping dies is simple and not complex. Line B at the bottom of FIG 3 indicates the centerline of the split mold on the cable clamp 1, and the arrows to either side of line B indicate the directions in which the mold is split.

An interlocking shoulder 34 is formed in the first hole 29 forming the recess 27 to receive the protrusion 26 so as to engage the protrusion 26 and lock the cover 13 in the closed position when it is closed (see FIG 7). The interlocking shoulder 34 is formed so as to make contact with the bottom surface of the protrusion 26 when the cover 13 is closed. The first wall 31 and the second wall 33 keep the protrusion 26 from coming out of the recess 27 when the cover 13 is closed, even when slippage force acts lengthwise on the slender object 2, and the clamp portion 10 does not move relative to the cover 13 in either direction lengthwise. As a result, the protrusion 26 remains interlocked with the interlocking shoulder 34 of the recess 27 even when a slippage force acts lengthwise on the slender object 2. The clamp remains locked and the slender object 2 remains secure even if the thin hinge 17 is broken by the slippage force acting on the slender object 2 lengthwise.

The fixed portion 5 has a flange 14 and a pair of legs 15, that are inserted into an attachment hole in the support to fix the cable clamp 1 to the support. The legs 15 extend from the bottom end of a rigid shaft 35 that extends perpendicularly downward from the clamp portion 10. The legs 15 bend elastically to the outside in opposite directions with respect to one another. The flange 14 is formed at the base of the shaft 35 adjacent to the clamp portion 10. Multiple shoulders 37 are formed on the ends of the legs 15 to interlock with edges of an attachment hole in the support, enabling the cable clamp to become interlocked with supports of varying thicknesses. A pair of flat, elastic portions 38 project outwardly from the flange 14 to make contact elastically with the support. The multiple shoulders 37 on the legs 15 and the elastic portions 38 allow a single type of cable clamp to be fixed to supports of different thicknesses. A triangular flat body 39 extending downwards perpendicularly from the flange 14 is formed integrally adjacent to the shaft 35 so as not to interfere with the elastic deformation of the legs 15.

The following is an explanation with reference to FIG 5 through FIG 7 of the operation performed by the cable clamp 1 to secure a slender object 2 to a support. The slender object 2 is placed in the holding portion 6 of the clamp portion 10 of the cable clamp 1, and the cover 13 is pivoted around the thin hinge 17 as shown by arrow 41 in FIG 5 so the cover engaging portion 18 interlocks with the clamp portion engaging portion 19.

By turning the cover 13, the protrusion 26 formed at the end of the clamp arm 7 in the clamp portion 10 is accommodated by the recess 27 formed from the first hole 29 and the second hole 30 in the cover 13. As shown in FIG 7, the protrusion 26 accommodated in the recess 27 engages the interlocking shoulder 34 and locks the cover 13 in the closed position. The first wall 31 and the second wall 33 also keep the protrusion 26 from coming out of the recess 27 even when the protrusion 26 moves lengthwise with respect to the slender object 2. Cable clamps 1 can be attached at several places on the support, such as a body panel, for a slender object 2, following the layout for the slender object 2. Because the positioning of slender objects 2 varies depending on the manufacturer, an automobile maker, for example, can receive the cable clamps 1 and attach a slender object with the cable clamps attached on the automobile assembly line in the body panel section.

FIG 8 shows a cable clamp 1 attached to a thin body panel 3. If the body panel 3 is thin, the shoulders 37 on the legs 15 of the fixed portion 5 interlock with edges of an attachment hole 42 at the ends. The elastic portions 38 on the flange 14 apply pressure to the body panel 3 without bending much. FIG 9 shows a cable clamp 1 attached to a thick body panel 3 A. If the body panel 3 is thick, the shoulders 37 on the legs 15 of the fixed portion 5 interlock with edges of an attachment hole 43 at the base. The elastic portions 38 on the flange 14 apply pressure to the body panel 3 while bent back. In this way, the cable clamp 1 is able to be securely attached to supports of varying thicknesses. Therefore, a single type of cable clamp can be used regardless of the thickness of the support.

While a preferred embodiment of the invention has been shown and described, it will be apparent that changes can be made without departing from the principles and spirit of the invention, the scope of which is defined in the following claims.

## Claims

1. An integrally molded plastic clamp (1) for holding a slender object, comprising a substantially U-shaped clamp portion (10) having a pair of clamp arms (7, 9) and a cover (13) for closing an opening (11) in the clamp portion, wherein one end of the cover is connected by a thin hinge (17) to one of the clamp arms (7), enabling the cover to pivot and close the opening in the clamp portion, wherein an engagement portion (18) is formed on the other end of the cover to engage an engagement portion (19) on one end of the other clamp arm (9) to maintain the cover in the closed position, wherein a protrusion (26) projects outwardly from the one clamp arm (7), and a recess (27) is formed in the cover at a position corresponding to the protrusion to receive the protrusion when the cover is closed, wherein an interlocking shoulder (34) for interlocking with the protrusion so as to lock the cover in the closed position is formed in the recess, wherein walls on opposite sides of the recess restrict movement of the protrusion lengthwise with respect to the slender object, wherein the recess includes a first hole (29) extending from one side of the cover toward the other side of the cover lengthwise with respect to the slender object and a second hole (30) adjacent to the first hole and extending from the other side of the cover toward the one side of the cover lengthwise with respect to the slender object, and wherein one of the walls (31) of the recess is formed by an end surface of the first hole (29) on the other side, and the other wall (33) is formed by an end surface of the second hole (30) on the one side.

2. A clamp as described in Claim 1, wherein the clamp has a fixed portion (5) to be attached to a support, wherein the fixed portion includes a shaft (35) extending from the clamp portion (10), a pair of elastic legs (15) extending from an end of the shaft towards the clamp portion and bending outwardly in opposite directions with respect to one another, and a flange (14) adjacent to the clamp portion at the base of the shaft, wherein a plurality of shoulders (37) are formed on outside ends of the legs to interlock with an edge of an attachment hole in the support, and wherein a pair of elastic portions project (38) extend outwardly from the flange for elastically contacting the support.
